Europäisches Patentamt

European Patent Office

Office européen des brevets

(19)

(11) Veröffentlichungsnummer: **0 309 695 B1**

(12) **EUROPÄISCHE PATENTSCHRIFT**

(45) Veröffentlichungstag der Patentschrift: **18.03.92**

(51) Int. Cl.⁵: **G11B 17/04**

(21) Anmeldenummer: **88112854.0**

(22) Anmeldetag: **06.08.88**

(54) **Lade- und Entladevorrichtung eines CD-Gerätes.**

(30) Priorität: **30.09.87 DE 3732918**

(43) Veröffentlichungstag der Anmeldung:
**05.04.89 Patentblatt 89/14**

(45) Bekanntmachung des Hinweises auf die
Patenterteilung:
**18.03.92 Patentblatt 92/12**

(84) Benannte Vertragsstaaten:
**AT BE CH DE ES FR GB GR IT LI LU NL SE**

(56) Entgegenhaltungen:
**BE-A- 898 529        DE-A- 3 222 695**
**DE-A- 3 608 662        DE-C- 3 615 643**
**US-A- 4 513 409        US-A- 4 570 194**
**US-A- 4 589 101        US-A- 4 677 607**

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Hake, Martin
Konstanzerstrasse 39
W-7730 Villingen-Schwenningen(DE)**

EP 0 309 695 B1

## Beschreibung

Die Erfindung betrifft ein CD-Gerät mit einer Lade- und Entlade-Vorrichtung für eine CD-Platte nach Oberbegriff des ersten Anspruchs. Ein solches CD-Gerät is aus der DE-A-3608662 bekannt.

Es sind verschiedene Konstruktionen von Lade- und Entlade-Vorrichtungen bekannt, z.B. motorgetriebene Schubladen, in welche die CD-Platte manuell eingelegt bzw. entnommen wird. Diese Lösung ist mechanisch und elektrisch/elektronisch im allgemeinen recht aufwendig, also kostenaufwendig, zumal wenn schnelle und geräuscharme Arbeitsweise gefordert waren.

Der Erfindung liegt die Aufgabe zugrunde, eine Systemlösung zu finden, die einfach, das heißt bei geringem Aufwand kostengünstig ist und auch geräuscharm und schnell funktioniert.

Die Lösung dieser Aufgabe wird gemäß der Erfindung durch die im Anspruch 1 aufgeführten Merkmale gelöst. Einzelheiten und Ausgestaltungen sind den Unteransprüchen zu entnehmen.

Bei ähnlicher Aufgabenstellung ist zwar eine Lösung aus der DE-A-36 08 662 bekannt geworden, die ein vergleichbares Grundkonzept hat, aber nicht wie die vorliegende Lösung auch eine einfache Konstruktion für die Positionierung der CD-Platte in ihre Abtastposition und aus derselben in die Entladeposition enthält, sondern diesbezüglich einen großen Aufwand benötigt, der im einzelnen in der US-A-4 513 409 und der US-A-4 589 101 offenbart wurde. Es ist auch kein Hinweis zu entnehmen, daß die Vorrichtung der US-A-4513409 für das Laden und Entladen von CD-Platten gedacht und geeignet ist, vielmehr ist offensichtlich ein Plattenspieler bzw. -wechsler gemeint für mechanisch abgetastete Schallplatten für die Anwendung in Fahrzeugen.

Aus der DE-A-3608662 ist zu entnehmen, daß eine kraftbetätigte Vorrichtung zur Unterstützung des Ladens und Entladens einer Platte bei einer Plattenspiel- oder Aufnahmevorrichtung vorgesehen ist, die ein Gehäuse 6 zur Aufnahme und Halterung der Platte 4 aufweist, sowie eine kraftbetätigte bewegliche Rolle, die von einem Motor angetrieben wird, um die Platte in Drehung zu versetzen. Durch Abrollen an einer im wesentlichen linearen Führungseinrichtung gelangt die Platte in einen Plattenträger 8, der drehbar angebracht und gleichzeitig in einer Schraubenbahn senkrecht zur Plattenebene bewegbar ist, wie das ausführlich in den beiden US-Patentschritten erläutert ist.

In einer Zeichnung ist ein Ausführungsbeispiel der einfachen, erfindungsgemäßen Konstruktion gezeigt. Auf sie nimmt die folgende Beschreibung Bezug. Die Zeichnung zeigt in

Figur 1      eine Draufsicht auf das CD-Gerät mit durchsichtigem Gehäuse;

Figur 2      eine vereinfachte Seitenansicht eines ebensolchen Gerätes;

Figur 3      eine Ansicht, vereinfacht dargestellt, der Front- und Bedienungsseite.

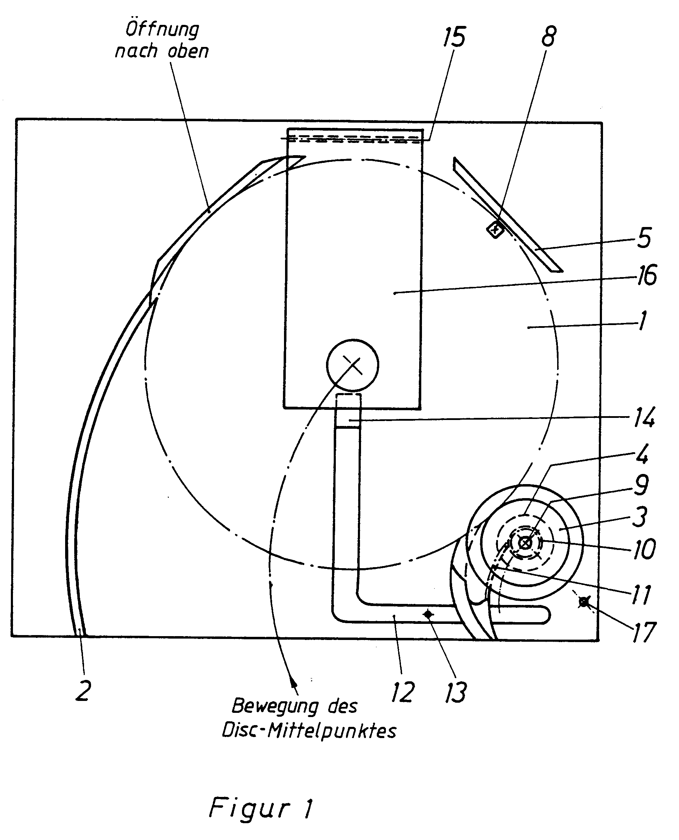

Hingegen besteht das Grundkonzept bei der vorliegenden Erfindung, wie das Ausführungsbeispiel in den Figuren 1 und 2 zeigt, darin, die CD-Platte 1 in einer gekrümmten, vorzugsweise kreisbogenförmigen Führung 2 entlangzurollen, wobei die Rundung der CD-Platte 1 ausgenutzt wird. Sobald eine zu ladende CD-Platte 1 in den Einführungsschlitz beispielsweise an der Front- und Bedienungsseite des CD-Gerätes eingeschoben wird, liegt sie auf der einen Seite in der Kerbe der Führung 2, auf der anderen Seite, etwa diametral dazu in der Kerbe des Reibrades 3 des Antriebsmotors 4. Wenn die CD-Platte 1 nun leicht in das Gerät eingeschoben wird, wird der Motor 4 leicht gedreht. Die entstehende Induktionsspannung wird detektiert und als Einschaltbefehl ausgewertet. Dasselbe kann auch mittels eines mechanisch betätigten Schalters bewirkt werden. Der Motor 4 dreht nun in gleicher Richtung weiter, wie er angeschoben wurde; dadurch rollt die CD-Platte 1 in der Führung 2 weiter bis sie an einen Anschlag 5 läuft. Es gibt mehrere Möglichkeiten, um die CD-Platte 1 in Abtaststellung mit dem Pick-up-System und dem Laufwerk 16, das Plattenteller 6 und Klemmvorrichtung 7 aufweist, zusammenzuführen. Es kann mit einer Lichtschranke 8 abgefragt werden, wie weit die CD-Platte 1 entlang der Führung 2 gerollt ist und daraufhin mit elektrischen Signalen die weitere Steuerung der Mechanik vollzogen werden. Es ist aber auch eine mechanische Ausführung des Vorgangs auf einfachste Weise mit geringstem Aufwand nach der Erfindung möglich. Dazu stößt die CD-Platte 1, wenn sie ganz nach innen gerollt ist, an einen mechanischen Anschlag 5, der ihre Bewegung blockiert. Der Motor 4 für den Reibradantrieb 3 ist gemeinsam mit diesem als Einheit schwenkbar gelagert. Wenn sich nun die CD-Platte nicht mehr drehen kann, der Motor 4 aber noch weiter antreibt, bewegt er sich durch die Reibung zwischen Reibrad 3 und Plattenrand von der CD-Platte 1 weg, indem die Einheit verschwenkt wird. Ist nun auf der Motorachse 9 ein kleines Zahnrad 10 befestigt, kann dieses in eine starr montierte, gekrümmte Zahnstange 11 eingreifen, die so angebracht ist, daß sie vom Zahnrad 10 nur erreicht wird, wenn der Motor 4 via Reibrad 3 an der stehenden CD-Platte 1 weiterläuft. Der Motor 4 betätigt dabei einen Hebebügel 12 um seinen Drehpunkt 13 am Gehäuseboden, während die Einheit Motor 4 und Reibrad 3 an der Zahnstange 11 entlangläuft. Der Hebebügel 12 reicht mit seinem keilförmigen Ende 14 unter das Laufwerk 16 mit dem CD-Motor 18 für die CD-Platten-Abtastung greifend, wobei dieses die CD-Platte anhebend um die Achse 15 geschwenkt wird bis die am Gehäusedeckel beweglich montierter Klemmvorrichtung 7 die CD-Platte 1 auf dem Plattenteller 6 des Laufwerkes 16 festklemmt. Die nunmehr notwendige Abschaltung des Motors 4 für den Ladevorgang kann von einem mechanisch betätigten Schalter oder über die Stromzunahmedetektion des blockierenden Motors erfolgen.

Wie erwähnt, ist der Motor 4 zum Laden bis zum Beginn des Spielbetriebes in Richtung Gehäusefront geschwenkt um den Drehpunkt 17, samt der die Einheit Motor 4 und Reibrad 3 tragenden Halteplatte. Zum Entladen der CD-Platte 1, das heißt bis zur Herausgabe der CD-Platte 1, muß der beschriebene Funktionsablauf in umgekehrter Richtung und Folge ablaufen. Das Anlaufen des Motors 4 kann entweder mittels einer Schaltertaste an der Gerätefront oder über direktes Anschieben des Motors 4 durch den Bediener erfolgen. In diesem Fall wird durch das Hineindrücken der "Open"Taste der Motor 4 auf der Zahnstange 11 angeschoben und läuft dann auf die gleiche Weise an wie beim Laden der CD-Platte 1.

Die Erfindung ist beispielsweise für CD-Spieler, Videoplattenspieler, DRAW-Disc-Spieler oder magneto-optische Geräte geeignet.

## Patentansprüche

1. CD-Gerät mit einer kraftbetätigten Lade- und Entlade-Vorrichtung für eine CD-Platte (1), wobei für den horizontalen Lade- und Entladevorgang ein entsprechender Schlitz an der Gehäusefrontseite vorgesehen ist zur Manuellen Einführung oder Entnahme einer CO-Platte (1) und wobei einseitig an den Schlitz nach dem Inneren des Gerätes sich eine Führungseinrichtung (2) für den Plattenaußenrand befindet, während der gegenüberliegende Plattenaußenrand von einem motorgetriebenen Reibrad (3) erfaßt wird, um so die CD-Platte in ihrer Abtastposition zu positionieren und aus derselben in die Entladeposition zu befördern, indem die Achse von Motor und Reibrad (3) federnd gelagert sind, wobei die Federkraft das Reibrad (3) an den Plattenaußenrand andrückt, **dadurch gekennzeichnet,** daß die Führungseinrichtung (2) kreisbogenförmig ausgebildet ist und innen mit einer Rille oder Kerbe versehen ist, daß auf der Motorachse (9) ein Zahnrad (10) vorgesehen ist, das am Ende des Ladevorgangs mit einer am Geräteboden befestigten, gekrümmten Zahnstange (11) zusammenwirkt, um die Motor-Reibrad-Einheit (4, 3) aus dem Eingriff des Reibrades (3) am Plattenaußenrand wegzuschwenken, daß ein Hebebügel (12) von der wegschwenkenden Motor-Reibrad-Einheit (4, 3) betätigt wird, der so ausgebildet und gelagert ist, daß er mit seinem keilförmigen Ende (14) das Laufwerk (16) um eine Achse (15), die es schwenkbar lagert, soweit anhebt, daß die CD-Platte (1) von einem Plattenteller (6) von unten erfaßt und geringfügig angehoben und damit gegen eine innen am Gerätegehäusedeckel befestigte Klemmvorrichtung (7) gedrückt wird.

2. CD-Gerät gemäß Anspruch 1, **dadurch gekennzeichnet,** daß die Führungseinrichtung (2) nahe ihrem inneren Ende so ausgebildet ist, daß eine hineingerollte CD-Platte (1) vertikal in ihre Spielebene bewegt wird.

3. CD-Gerät gemäß Anspruch 1, **dadurch gekennzeichnet,** daß die Motor-Reibrad-Einheit (4, 3) in radialer Richtung außerhalb der gedachten Verbindungslinie CD-Plattenmitte und Achse (9) des Motors (4) federnd und drehbar ist, so daß die Motor-Reibrad-Einheit (4, 3) um diesen Drehpunkt (17) schenkbar ist.

4. CD-Gerät nach Anspruch 1, **dadurch gekennzeichnet,** daß, um eine CD-Platte (1) einzuziehen, der das Reibrad (3) anreibende Motor (4) dadurch eingeschaltet wird, daß beim manuellen Einschieben der CD-Platte (1) ein Schaltkontakt betätigt wird oder der Motor (4) über das Reibrad (3) geringfügig gedreht wird und so eine Induktionsspannung liefert, die als Einschaltimpuls ausgewertet wird.

5. CD-Gerät nach Anspruch 1, **dadurch gekennzeichnet,** daß am Ende des Einzugweges der CD-Platte (1), das ist der Beginn des Entladeweges, in Verbindung mit einem Anschlag (5) ein Schaltkontakt zum Abschalten des das Reibrad (3) antreibenden Motors (4) vorgesehen ist oder über die Stromzunahmedetektion des blockierenden Motors (4) ausgelöst wird.

## Claims

1. CD unit with a power-operated loading and unloading mechanism for a compact disc (1), in which for the horizontal loading and unloading process a corresponding slot is provided on the front side of the case for the manual introduction or removal of a compact disc (1) and in which there is located at one side of the slot towards the inside of the unit a guide device (2) for the disc outer edge, while the opposite disc outer edge is engaged by a motor-driven friction wheel (3) in order in this way to position the compact disc in its scanning position and convey it out of the latter into the unloading position, the axes of motor and friction wheel (3) being resiliently supported, with the resiliency pressing the friction wheel (3) against the disc outer edge, **characterised in that** the guide device (2) is constructed curved in shape and is provided on the inside with a groove or slot, that on the motor shaft (9) a toothed wheel (10) is provided which interacts at the end of the loading process with a curved toothed rack (11) fixed to the unit bottom in order to swing the motor-friction wheel unit (4, 3) away to break the engagement of the friction wheel (3) at the disc outer edge, that a link (12) is actuated by the swinging-away motor-friction wheel unit (4, 3), said link (12) being so constructed and supported that with its wedge-shaped end (14) it raises the drive mechanism (16), about an axis (15) which pivots the latter, by a distance such that the compact disc (1) is engaged from below and slightly raised by a turntable (6) and is thus pressed against a clamping device (7) fixed on the inside to the unit case lid.

2. CD unit according to claim 1, **characterised in that** the guide device (2) is constructed near to its inner end in such a way that a rolled-in compact disc (1) is moved vertically into its playing level.

3. CD unit according to claim 1, **characterised in that** the motor-friction wheel unit (4, 3) is resilient and rotatable in a radial direction outside the notional connecting line between compact disc centre and shaft (9) of the motor (4) so that the motor-friction wheel unit (4, 3) is pivotable about this point of rotation (17).

4. CD unit according to claim 1, **characterised in that,** in order to retract a compact disc (1), the motor (4) rubbing against the friction wheel (3) is switched on by the fact that during the manual introduction of the compact disc (1) a switch contact is actuated or the motor (4) is rotated slightly by means of the friction wheel (3) and thus supplies an induced voltage which is processed as a switching-on pulse.

5. CD unit according to claim 1, **characterised in that** at the end of the retraction path of the compact disc (1), i.e. the start of the unloading path, in conjunction with a stop (5) a switch contact is provided for the switching off of the motor (4) driving the friction wheel (3) or disconnection occurs by means of the current increase detection of the blocking motor (4).

**Revendications**

1. Appareil pour disques compacts avec un dispositif de chargement et de déchargement actionné mécaniquement pour un disque compact (1), une fente correspondante étant prévue sur la face frontale de l'appareil, pour l'opération de chargement et de déchargement horizontal, pour l'introduction ou la prise manuelle d'un disque compact (1), un dispositif de guidage (2) pour le bord extérieur du disque se trouvant sur l'un des côtés de la fente vers l'intérieur de l'appareil, tandis que le bord extérieur opposé est saisi par un galet de friction (3) entraîné par moteur pour positionner ainsi le disque compact dans sa position de balayage et pour le transporter de celle-ci dans la position de déchargement, les axes du moteur et du galet de friction (3) étant positionnés sur des paliers à ressort, la force du ressort poussant le galet de friction (3) contre le bord extérieur du disque, **caractérisé en ce** que le dispositif de guidage (2) est configuré en forme d'arc de cercle et qu'il est équipé à l'intérieur d'une rainure ou encoche, qu'une roue dentée (10) est prévue sur l'axe du moteur (9) qui concourt, à la fin de l'opération de chargement, avec une crémaillère (11) courbée, fixée au fond de l'appareil, pour faire pivoter l'entité moteur-roue de friction (4, 3) hors de l'engrènement du galet de friction (3) au bord extérieur du disque, qu'un lever de levage (12) est actionné par l'entité moteur-roue de friction (4, 3) que l'on doit faire pivoter, levier qui est configuré et positionné de telle manière qu'il soulève avec son extrémité en forme de clavette (14) le mécanisme d'entraînement (16) autour d'un axe (15), qui le positionne en le rendant pivotant, de telle manière que le disque compact (1) est saisi par le bas par un plateau pour disques (6), qu'il est légèrement soulevé et qu'il est ainsi appuyé contre un dispositif de blocage (7) fixé à l'intérieur sur le couvercle du boîtier de l'appareil.

2. Appareil pour disques compacts selon la revendication 1, **caractérisé en ce** que le dispositif de guidage (2) est configuré à proximité de son extrémité intérieure de telle manière qu'un disque compact (1) qui y est glissé soit déplacé verticalement dans son plan de lecture.

3. Appareil pour disques compacts selon la revendication 1, **caractérisé en ce** que l'entité moteur-galet de friction (4, 3) est élastique et rotative dans le sens radial à l'extérieur de la ligne de jonction imaginaire milieu du disque compact et axe (9) du moteur (4) si bien que l'entité moteur-galet de friction (4, 3) peut pivoter autour de ce pivot (17).

4. Appareil pour disques compacts selon la revendication 1, **caractérisé en ce** que, pour rentrer un disque compact (1), le moteur (4) qui entraîne le galet de friction (3) est mis en marche par le fait qu'un contact de commutation est actionné lors de l'introduction manuelle du disque compact (1) ou que le moteur (4) est légèrement mis en rotation par le galet de friction (3) et qu'il délivre ainsi une tension d'induction qui est exploitée comme impulsion d'enclenchement.

5. Appareil pour disques compacts selon la revendication 1, **caractérisé en ce** qu'à la fin du parcours de rentrée du disque compact (1), c'est le début du parcours de déchargement, un contact de commutation est prévu en relation avec une butée (5) pour mettre hors circuit le moteur (4) qui entraîne le galet de friction (3) ou est déclenché par la détection de l'augmentation de courant du moteur (4) qui bloque.

Öffnung
nach oben

15    8

5

16

1

14

4
9
3
10
11
17

2

Bewegung des
Disc-Mittelpunktes

12    13

Figur 1

## Figur 2

Öffnung
nach oben

7    16    1

15    6    18    14

## Figur 3

2    3

12    4    9    10    17    13